Europäisches Patentamt

European Patent Office

Office européen des brevets

(19)

(11) Veröffentlichungsnummer: **0 278 058**
**A1**

(12) # EUROPÄISCHE PATENTANMELDUNG

(21) Anmeldenummer: **87115650.1**

(22) Anmeldetag: **24.10.87**

(51) Int. Cl.4: **G06K 19/08 , G07F 7/08**

(30) Priorität: **23.01.87 CH 247/87**

(43) Veröffentlichungstag der Anmeldung:
**17.08.88 Patentblatt 88/33**

(84) Benannte Vertragsstaaten:
**CH DE FR GB IT LI**

(71) Anmelder: **LGZ LANDIS & GYR ZUG AG**
**Gubelstrasse 22**
**CH-6301 Zug(CH)**

(72) Erfinder: **Huiser, André Martinus Jan**
**Burggasse 12**
**CH-9442 Berneck(CH)**
Erfinder: **Glass, Andrew Stuart**
**Zugerstrasse 60**
**CH-6318 Walchwil(CH)**

(54) **Echtheitserkennungseinrichtung für Dokumente.**

(57) Es wird eine Echtheitserkennungseinrichtung für Dokumente (1) beschrieben, bei denen in einem Merkmalteil deterministische Merkmale (12) unter stochastischen Merkmalen (15) verborgen liegen. Dazu werden Bildflächen (24) benutzt, die in oder in der Umgebung der reellen Bildebene des zur Abbildung des Merkmalteils benutzten optischen Systems (22) liegen. Durch den Einfluss des stochastischen Merkmals (15) entstehen unscharfe Abbildungen, die nur mit Hilfsmitteln ausgewertet werden können. Als Auswertmethoden werden beispielsweise die Intensitätsvergleichsmethode oder, bei periodischem deterministischem Merkmal (12), die Fourier-Analysenmethode benutzt, um die Echtheit des deterministischen Merkmals (12) festzustellen. Diese Methoden können durch die Tiefenschärfemethode ergänzt werden, mittels der festgestellt wird, ob die mittlere Korngrösse des stochastischen Merkmals (15) der im echten Dokument zu erwartenden entspricht. Nachdem festgestellt ist, dass das Dokument (1) echt ist, werden die Funktionen der angschlossenen Anlage (35) freigegeben.

Fig.16

## Echtheitserkennungseinrichtung für Dokumente

Die Erfindung bezieht sich auf eine Echtheitserkennungseinrichtung für Dokumente nach dem Oberbegriff des Anspruchs 1.

Die meisten heute gebräuchlichen Dokumente, wie z. B. Kreditkarten, Karten mit entwertbaren Zahlungsmitteln, Identitätskarten, Fahrausweise und dergleichen können mit den heute zur Verfügung stehenden Mitteln ohne allzugrossen Aufwand gefälscht werden. Es sind zahlreiche Vorschläge bekanntgeworden, solche Dokumente mit Echtheitsmerkmalen auszurüsten, die den Aufwand für erfolgversprechende Fälschungen erhöhen. Dabei wird in Kauf genommen, dass diese Merkmale nur von Echtheitserkennungseinrichtungen als richtig erkannt werden können. Als Echtheitserkennungsmerkmale werden unter anderem das Anbringen desselben Gitters, Hologramms oder Kinoforms, das heisst von Merkmalen, die eine sie kennzeichnende deutliche Struktur aufweisen-diese werden unter dem Namen "deterministische Merkmale" zusmmengefasst -an den Dokumenten vorgeschlagen. Mit ihnen kann man ein von der geometrisch-optischen Abbildung verschiedenes Bild erzeugen. Diese Methoden erlauben eine Echtheitserkennung, ihr Nachteil ist, dass solche Merkmale ohne erhebliche Hilfsmittel von aussen erkannt und daher, wenn auch mit grossem Aufwand, gefälscht werden können.

Nachdem festgestellt wurde (Internationales URSI-Symposium 1980 on Electromagnetic Waves, München, 26 - 29.08.80, Seite 315 C/ 1-2), dass unter bestimmten Bedingungen die deterministischen Merkmale auch dann noch unter Benutzung von Hilfsmitteln erkannt werden können, wenn sie unter nach den Gesetzen der Wahrscheinlichkeit störenden "stochastischen Merkmalen" verborgen sind, kann das Echtheitsmerkmal gegen Erkennen geschützt und so seine Fälschung nahezu unmöglich gemacht werden.

In der EP-PS 0 057 271 wird ein Verfahren zur Echtheitserkennung an Dokumenten beschrieben, die deterministische Merkmale enthalten, die so unter stochastischen Merkmalen verborgen sind, das sie ohne spezielle Hilfsmittel nicht erkannt werden können. Zur Echtheitserkennung wird das Dokument mit Licht mit einem hohen Kohärenzgrad beleuchtet und zwei enge, vom Dokument ausgehende Lichtbündel ausgesondert. Die Richtung des einen Lichtbündels kann frei gewählt werden. Dann ist die Richtung des anderen Lichtbündels durch die Wellenlänge des Lichtes und die Eigenschaften des deterministischen Merkmals gegeben. Beide Lichtbündel werden vereinigt und durch entsprechende opto-elektronische Mittel eine vom Kohärenzgrad abhängige Grösse bestimmt, die als Mass für die Echtheit des Dokumentes dient. In der genannten Schrift wird ferner in umfangreicher Weise beschrieben, wie Dokumente aufgebaut werden, in denen die deterministischen Merkmale unter stochastischen Merkmalen verborgen sind, so das sie als Echtheitsmerkmale verwendet werden können.

Durch das Aussondern der beiden Lichtbündel, mit denen eine Reihe von optischen Manipulationen vorgenommen werden müssen, wird die beschriebene Echtheitserkennungseinrichtung jedoch kompliziert und umfangreich, so dass ihre Verwendung, beispielsweise als Kartenlesegerät in einem Zahltelefon, umständlich ist. Die Methode ist zwar in hohem Masse fälschungssicher, die zugehörigen Einrichtungen aber zu gross und zu teuer, um an vielen Stellen, z. B. in einfachen Verkaufsapparaten, Echtheitsprüfungen durchführen zu können.

Der Erfindung liegt die Aufgabe zugrunde, eine Einrichtung zur fälschungssicheren Echtheitserkennung von Dokumenten zu schaffen, die wenig Raum benötigt, in der Anwendung einfach ist und sich preiswert genug herstellen lässt, so dass man sie überall in Anlagen einsetzen kann, wo die Echtheit von Dokumenten vor Einleiten des eigentlichen Funktionsvorganges geprüft werden muss. Diese Aufgabe wird durch die Merkmale im Kennzeichen des Anspruchs 1 gelöst. Die weiteren Ansprüche betreffen vorteilhafte Ausführungsformen einer Einrichtung nach Anspruch 1.

Nachstehend werden Ausführungsbeispiele und Diagramme der Erfindung durch Figuren erläutert. Es zeigen:

Fig. 1 : Ein Dokument in Form einer Karte;

Fig. 2 : Schnitt durch einen Merkmalteil eines Dokuments;

Fig. 3 : Schnitt durch einen Merkmalteil mit Hologramm;

Fig. 4 : optischer Teil einer Echtheitserkennungseinrichtung, mit Durchlicht arbeitend;

Fig. 5 : optischer Teil einer Echtheitserkennungseinrichtung, mit Auflicht arbeitend;

Fig. 6 : optischer Teil einer Echtheitserkennungseinrichtung, zur ·Auswertung von Hologrammen;

Fig. 7 : optischer Teil einer Echtheitserkennungseinrichtung, mit halbdurchlässigem Spiegel;

Fig. 8 : Lichtverteilung in der Bildfläche bei deterministischem Merkmal;

Fig. 9 : Lichtverteilung in der Bildfläche bei stochastischem Merkmal;

Fig. 10 : Lichtverteilung in der Bildfläche, Ueberlagerung von Fig. 8 und 9;

Fig. 11 : Lichtverteilung in der Bildfläche, bei deterministischem und stochastischem Merkmal;

Fig. 12 : optischer Teil einer Echtheitserkennungseinrichtung, Beweglichkeit der Teile;

Fig. 13a : Aufsicht auf einen Detektor zur Intensitätsmessung;

Fig. 13b : Querschnitt eines Detektors zur Intensitätsmessung;

Fig. 14a : Aufsicht auf einen Detektor zur Intensitäts-und Tiefenschärfemessung;

Fig. 14b : Querschnitt eines Detektors zur Intensitäts-und Tiefenschärfemessung;

Fig. 15 : Aufsicht auf einen Detektor zur Fourier-Analyse;

Fig. 16 : Schema einer vollständigen Echtheitserkennungseinrichtung.

Gleichartige Teile sind in den verschiedenen Figuren mit den gleichen Bezugszeichen versehen.

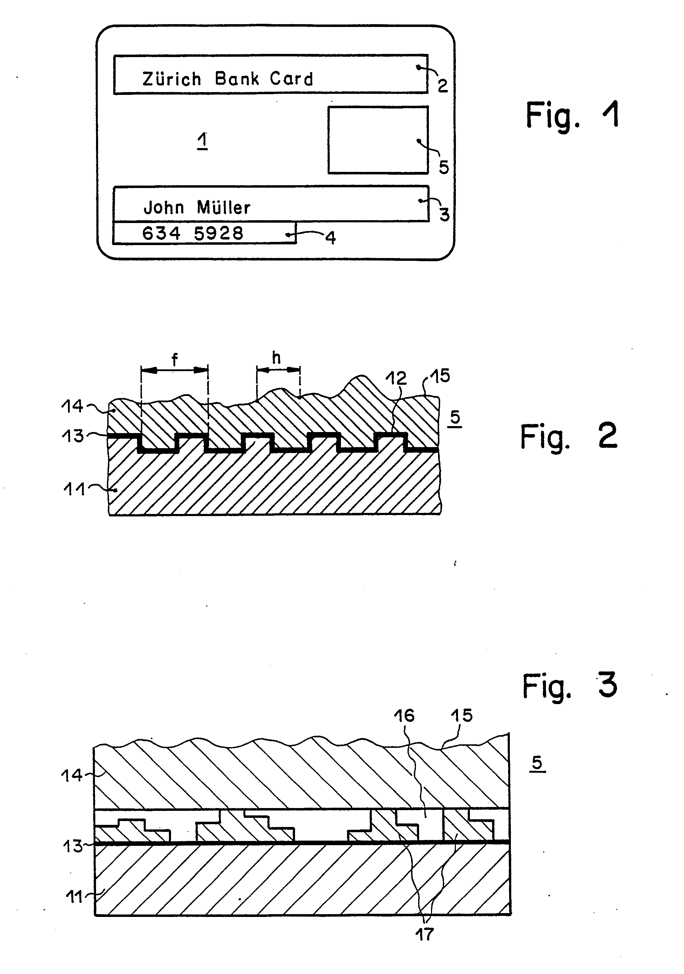

Die Fig.1 zeigt ein Dokument 1, hier in Form einer Karte. Das Dokument enthält als Merkmale eine Bezeichnung eines Ausgebers 2, eines Verwenders 3, eine Kartennummer 4 und ein Feld für die Echtheitsmerkmale, also einen Merkmalteil 5. Selbstverständlich kann das Dokument 1 auch anders gestaltet sein und je nach Aufgabe noch andere Merkmale tragen. Der Merkmalteil kann auch das gesamte Dokument 1 erfassen oder eine andere, aber im Dokument 1 flächig liegende Form haben.

Die Fig. 2 zeigt als Beispiel einen Schnitt durch den Merkmalteil 5. Er besteht aus einer nichttransparenten Grundschicht 11, die auf ihrer Oberseite beispielsweise die Form eines Gitters hat. Dies stellt ein deterministisches Merkmal 12 dar. Auf ihr ist eine sehr dünne, reflektierende Schicht 13 aufgetragen. Darüber liegt eine transparente Deckschicht 14, die nach unten in das deterministische Merkmal 12 eingeformt ist und oben eine rauhe Oberfläche aufweist, die diffus streut und daher ein stochastisches Merkmal 15 darstellt. Mindestens teilweise kohärentes Licht, das von oben auf das deterministische Merkmal 12 fällt, wird von der reflektierenden Schicht zurückgeworfen, aber am stochastischen Merkmal 15 gestreut, so dass der Einfluss des deterministischen Merkmals 12 unter dem des stochastischen Merkmals 15 verborgen wird. Der Merkmalteil 5 ist somit für die Verwendung von Auflicht in der Echtheitserkennungseinrichtung geeignet. Es zeigt sich, dass zwischen der Periode f des deterministischen Merkmals 12 und der mittleren optischen Korngrösse h der Oberflächenrauhigkeit ´des stochastischen Merkmals 15 annäherungsweise die Ungleichung

$f \lesssim 5h$

gelten muss.

Wird auch für die Grundschicht 11 transparentes Material verwendet, wird die Reflexionsschicht 13 weggelassen und werden für die Grundschicht 11 und die Deckschicht 14 Materialien mit verschiedenen Brechungsindizes für die verwendete Strahlung ausgesucht, so kann man ein Merkmalteil 5 für Durchlichtbeleuchtung aufbauen. Ebenso lässt sich ein Amplitudengitter, das heisst eine Anordnung, die aus abwechselnd durchsichtigen und undurchsichtigen Streifen besteht, als deterministisches Merkmal 12 verwenden. Das deterministische Merkmal 12 kann aber auch ein Symbol, zum Beispiel eine Ziffer, sein.

Die Fig. 3 stellt den Merkmalteil 5 mit einer Hologrammanordnung dar. Zwischen einer Grundschicht 11 und einer eine rauhe Oberfläche als stochastisches Merkmal 15 aufweisenden Deckschicht 14 befindet sich ein Hologramm 16 oder ein Kinoform, bei dem in der Fig. 3 die verschiedenen Graustufen durch verschieden dicke, - schraffierte Bereiche 17 angedeutet sind. Wird mit einem Auflichthologramm gearbeitet, so befindet sich unter dem Hologramm 16 eine reflektierende Schicht 13.

Es können darüber hinaus sämtliche in der EP-PS 0 057 271 angeführten Echtheitsmerkmale auch für die Echtheitsprüfung nach dieser Erfindung verwendet werden.

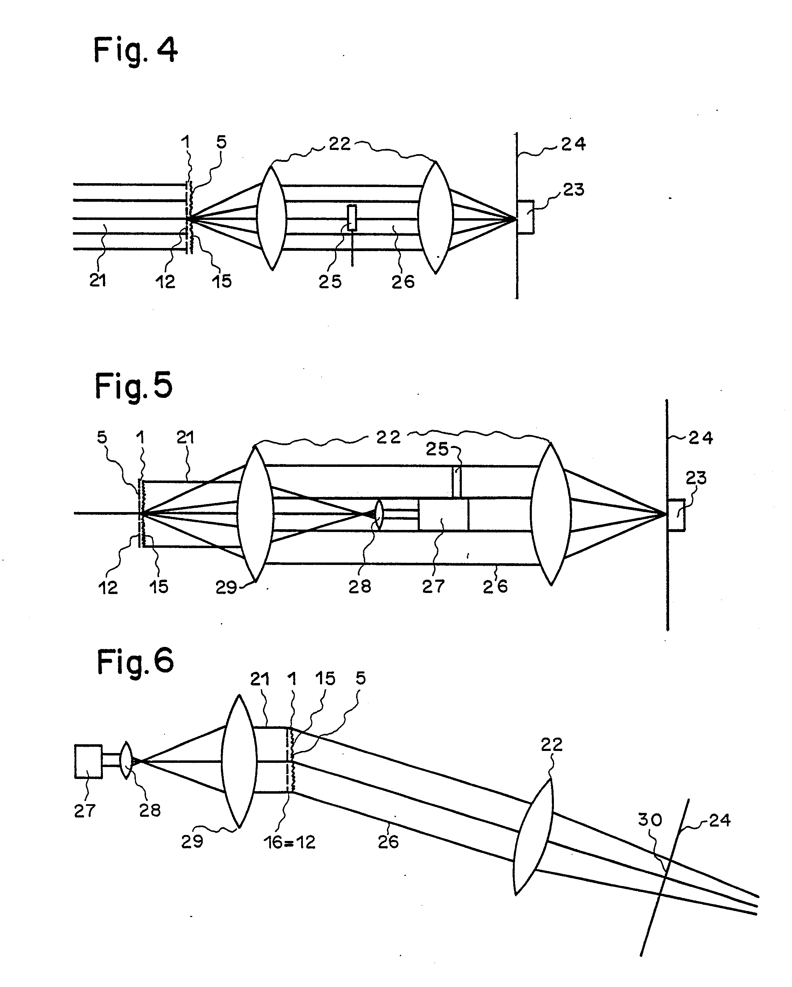

In der Fig. 4 ist beispielhaft der optische Teil einer Echtheitserkennungseinrichtung gezeichnet. Das Dokument 1 mit seinem Merkmalteil 5, bestehend aus einem deterministischen Merkmal 12 und aus einem dies verbergenden stochastischen Merkmal 15, wird mit einem Lichtstrahl 21 beleuchtet, der einen merklichen Anteil kohärenten Lichtes aufweist. Die Kohärenzlänge im Licht muss deutlich grösser als typische Abmessungen des Merkmalteils 5, zum Beispiel die Periode des deterministischen Merkmales 12, sein. Der Lichtstrahl 21 kann parallel, aber auch divergierend oder konvergierend auf das Dokument 1 fallen. Er kann zum Beispiel von einem Laser oder einer Leuchtdiode herrühren, die hier nicht gezeichnet sind. Mit Hilfe eines optischen Systems 22, das in diesem Beispiel aus zwei konvexen Linsen besteht, wird ein reelles Abbild des Merkmalteils 5 auf einem Lichtdetektor 23 auf der Bildfläche 24 erzeugt. Dies Abbild besteht aus dem geometrisch-optischen Bild des deterministischen Merkmals 12, das durch die Wirkung des stochastischen Merkmals 15 nur sehr unscharf abgebildet wird. Gegebenenfalls ist es notwendig, den in der Abbildung des Merkmalteils 5 auftretenden Kontrast besser hervorzuheben, was durch Einbringen optisch filtrierender Elemente, also beispielsweise von Filtern 25 oder Blenden, in den Strahlengang 26 zwischen dem Merkmalteil 5 und der Bildfläche 24 erreicht werden kann. Beeinflusst zum Beispiel das deterministische Merkmal 12 nur die Phase des in den Strahlengang 26 austretenden Lichtes - dies ist beispielhaft der Fall, wenn als deterministisches Merkmal 12 ein Phasengitter benutzt wird - so wird zweckmässigerweise als Filter 25 ein die Phasenunterschiede in Intensitätsunterschiede wandelndes Filter 25, beispielsweise ein Phasenkontrastfilter, benutzt.

In der Fig. 5 ist der optische Teil einer Echtheitserkennungseinrichtung gezeichnet, in dem der Merkmalteil 5 mit Auflicht beleuchtet wird. Das Licht zur Beleuchtung wird in diesem Beispiel durch einen Laser 27 erzeugt und weist einen hohen Kohärenzgrad auf. Es wird hier beispielsweise durch eine erste Konvexlinse 28 aufgeweitet und durch die objektnahe Konvexlinse des optischen System 22 parallel gerichtet. Die übrigen Teile der Fig. 6 entsprechen in Anordnung und Wirkung denen der Fig. 5.

Die Fig. 6 zeigt den optischen Teil einer Echtheitserkennungseinrichtung, in der Dokumente 1 untersucht werden, deren deterministische Merkmale 12 Hologramme 16 sind. Auch hier wird der beleuchtende Lichtstrahl 21 durch einen Laser 27 erzeugt und durch eine erste Konvexlinse 28 aufgeweitet und mit der objektnahen Konvexlinse 29 parallel gerichtet. Er trifft den Merkmalteil 5, der hier ein unter dem stochastischen Merkmal 15 verborgenes Hologramme 16 ist, das als deterministisches Merkmal 12 dient. Ueber das optische System 22 wird das Bild des Hologrammes 30 auf der Bildfläche 24 erzeugt. Auch das Bild des Hologrammes 30 ist deutlich diffuser, als wenn es ohne Vorhandenseins des stochastichen Merkmals 15 erzeugt worden wäre.

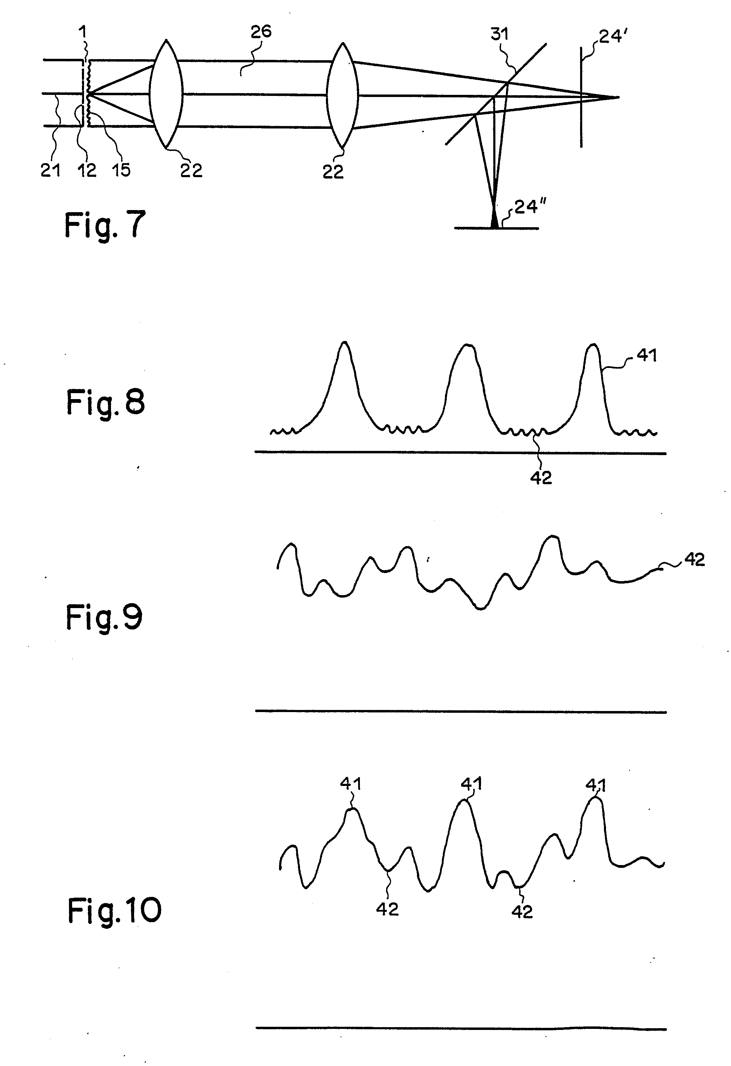

Für gewisse Auswertmethoden ist es notwendig, die Lichtintensitäten in mehreren Bildflächen 24 zu messen. Um dabei ohne unnötige Bewegungseinrichtungen für den optischen Teil auszukommen, werden beispielsweise nach der Figur 7 in den Strahlengang 26 nach dem optischen System 22 halbdurchlässige Spiegel 31 eingeführt und verschaffen so mehrere Bildflächen 24, von denen in Figur 7 nur zwei, 24' und 24" gezeichnet sind. Es lässt sich so mit der entsprechenden Zahl von Lichtdetektoren simultan und ohne Bewegungseinrichtung das Abbild des Merkmalteils 5 in mehreren Bildflächen 24', 24" untersuchen. Weiter lassen sich bei dieser Methode die Lichtwege zwischen den halbdurchlässigen Spiegeln 31 und den Bildflächen 24 verschieden lang machen, was Vorteile für die später zu besprechend Tiefenschärfemethode gibt. In diesem Falle entstehen mindesten zwei Bildflächen 24', 24", die nicht in, sondern in der Umgebung der reellen Bildebene des optischen Systems liegen. Die hier nicht genannten Teile der Fig. 7 entsprechen denen der Fig. 4.

Zur Echtheitsprüfung lässt sich auch infrarotes oder ultraviolettes Licht benutzen und Materialien beim Aufbau des Merkmalteils 5 verwenden, die nur gegenüber solchem Licht transparent sind. Man erhöht so die Fälschungssicherheit des Dokumentes 1, da sein deterministisches Merkmal 12 nicht nur unter dem stochastischen Merkmal 15 verborgen wird, sondern wegen der Undurchsichtigkeit im Sichtbaren der Merkmalteil 5 nur mit Hilfsmitteln erkannt und daher nur schwer zu kopieren ist.

Wie die Abbildung in einer Echtheitserkennungseinrichtung zustande kommt, wird an Hand der Fig. 8 bis 11 erläutert. Dabei werden die Bezugszeichen der Fig. 4 benutzt, ohne dass die betreffenden Teile in den Fig. 8 bis 11 dargestellt sind. Die Fig. 8 zeigt ein Profil der Lichtverteilung in der Bildfläche 24, wenn im Dokument 1 beispielsweise nur ein deterministisches Merkmal 12 in Form eines Amplitudengitters vorhanden ist. Ein solches besteht, wie früher gesagt, aus aneinanderliegenden durchsichtigen und undurchsichtigen Streifen. Entsprechend wechseln in der Figur 8 Gebiete mit von der Struktur des deterministischen Merkmals 12 herrührenden charakteristischen Intensitäten 41 mit Gebieten ab, in denen nur Streulichtintensitäten 42 auftreten, die im Falle der Figur 8 niedrig sind. Die Fig. 9 zeigt das gleiche Profil der Lichtverteilung, wenn im Dokument 1 nur stochastische Merkmale 15 vorhanden sind. Sie zeigt eine verhältnismässig hohe, rein willkürliche Lichtverteilung, es treten also nur Streulichtintensitäten 42 auf. In der Fig. 10 wird das Profil der Lichtverteilung gezeigt, das auftritt, wenn im Dokument 1 ein deterministisches Merkmal 12, hier ein Amplitudengitter, hinter einem stochastischen Merkmal 15 verborgen ist. Es entsteht durch Ueberlagerung von Fig. 8 und 9. Leicht lässt sich erkennen, dass sich die Lichtintensitäten in den Gebieten mit den charakteristischen Intensitäten 41 nur wenig von denen in den Gebieten mit nur Streulichtintensitäten 42 unterscheiden, so dass die Gebiete mit charakteristischen Intensitäten 41 nur unter Verwendung von Hilfsmitteln erkannt werden können.

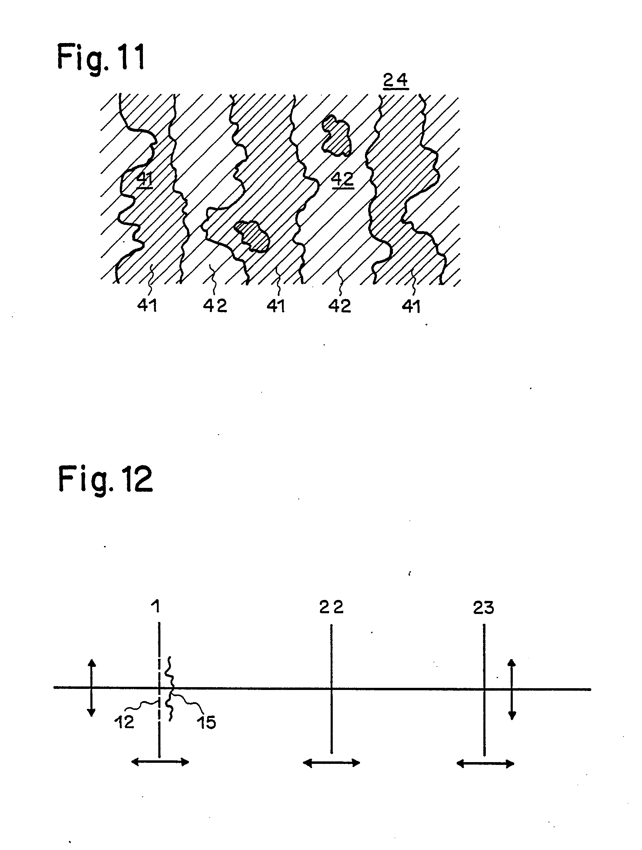

Eine flächenhafte Darstellung der Lichtverteilung, die in der Bildebene 24 von einem Merkmalteil 5 herrührt, in dem ein deterministisches Merkmal 12, hier ein Amplitudengitter, hinter einem stochastischen Merkmal 15 verborgen ist, zeigt die Figur 11. Es handelt sich um eine Höhenliniendarstellung der Lichtintensitäten in der Bildfläche 24, eine dichtere Schraffierung soll grössere Lichtintensitäten darstellen. Es lässt sich auch hier erkennen, dass sich das Gebiet mit den charakteristischen Intensitäten 41 nur schlecht von dem mit den Streulichtintensitäten 42 unterscheidet, eine solche Unterscheidung ist nur durch Verwendung von Hilfsmitteln möglich.

Grundsätzlich lassen sich Abbildungen von unter stochastischen Merkmalen 15 verborgenen deterministischen Merkmalen 12 mit denselben optischen Mitteln herstellen, mit denen sich auch rein deterministische Merkmale 12 darstellen lassen. Die Abbildung der hinter stochastischen Merkmalen 15 verborgenen deterministischen Merkmale 12, also die charakteristischen Intensitäten 41, sind aber diffuser, so dass sie sich oft nicht mit blossem Auge erkennen lassen. In diesem Falle ist es somit notwendig, in der Bildfläche 24 an vorbestimmten Stellen die auftretenden Lichtintensitäten mit Lichtdetektoren 23 (Fig. 12) zu bestimmen und zu vergleichen. Bei der Untersuchung eines echten Dokumentes 1, das ja immer dasselbe deterministische Merkmal 12 trägt, müssen an einem Teil dieser Stellen charakteristische Intensitäten 41 auftreten, an dem andern Teil dieser Stellen dürfen nur Streulichtintensitäten 42 auftreten. Durch eine entsprechende Auswertung der Messwerte dieser Lichtdetektoren 23 kann dann auf die Echtheit des Dokumentes 1 geschlossen werden.

Die Abbildung desselben deterministischen Merkmals 12, das hinter stochastischen Merkmalen 15 verborgen ist, mit der beschriebenen Echtheitserkennungseinrichtung zeigt folgende Eigenschaften für die Abbildung des deterministischen Merkmals 12 durch charakteristische Intensitäten 41:

- Die Abbildung ist unscharf.
- Sie unterscheidet sich bezüglich der Lichtintensität nicht sehr von den benachbarten Streulichtintensitäten 42.
- Die räumlichen Abstände zwischen den Stellen, an denen charakteristische Intensitäten 41 auftreten können, sind konstant.
- In einem gewissen Tiefenbereich bleibt die Abbildung ungefähr gleich unscharf. Dabei lässt sich beispielsweise ein Mass für die Unschärfe folgendermassen definieren: Es wird die Breite der Abbildung des durch das stochastische Merkmal 15 gestörten deterministischen Merkmals 12 (bei periodischem deterministischem Merkmal 12 die eines Abbildungselementes) bestimmt, in der seine Lichtintensität über der mittleren Streulichtintensität 42 in seiner Umgebung liegt. Dieselbe Breite wird bei der Abbildung des durch kein stochastisches Merkmal 15 gestörten deterministischen Merkmals 12 in derselben Anordnung gemessen. Die Hälfte der Differenz beider Breiten gibt ein Mass für die Unschärfe. Sonst bietet der sogenannte Kontrast, d. h. das Verhältnis zwischen der Differenz und der Summe der maximalen und minimalen Intensitäten, den erforderlichen Aufschlus über die Unschärfe an.

Es können beispielsweise folgende Auswertmethoden angewendet werden:

- Intensitätsvergleichsmethode: Die Lichtintensität wird an Orten gemessen, an denen bei echtem Dokument 1 charakteristische Lichtintensitäten 41 auftreten, sowie an anderen Orten in der Umgebung, an denen bei echtem Dokument 1 nur Streulichtintensitäten 42 auftreten können. Durch Mittelwertbildung der Werte beider Messgruppen und Vergleich der Mittelwerte lässt sich auf das Vorhandensein des deterministischen Merkmals 12 und damit auf die Echtheit des Dokuments 1 - schliessen.

- Fourier-Analysenmethode: Sie lässt sich nur bei deterministischem Merkmalen 12 anwenden, die eine Periode aufweisen. Die Lichtintensitäten und die Lage der Messpunkte werden in der Bildfläche 24 in einer oder mehreren Linien parallel zur Richtung der Periode des Abbilds des deterministischen Merkmals 12 an vielen Punkten gemesen und eine Fourier-Analyse über die Messwerte durchgeführt. Die Fourier-Transformierte wird in Abständen, die der Periode des deterministischen Merkmals 12 entsprechen, Maxima aufweisen, wenn das Dokument echt ist. Die Fourier-Analyse ist eine besonders empfindliche Methode, die Echtheit eines Dokumentes 1 nachzuweisen, das ein Merkmalteil 5 mit einem periodischen deterministischen Merkmal 12 enthält, das unter einem stochastischen Merkmal 15 verborgen liegt.

Ist die Echtheit des deterministischen Merkmals 12 durch eine Intensitätsvergleichsmessung, mit Hilfe einer Fourier-Analyse oder eine andere Methode verifiziert, so kann durch eine Tiefenschärfemessung eine zusätzliche Aussage über das stochastische Merkmal 15 hergeleitet werden. Dazu wird die Unschärfe der charakteristischen Lichtintensitäten 41 in zwei Bildflächen 24 in vorbestimmtem Abstand vor und hinter der reellen Bildebene verglichen. Vorteilhafterweise bedient man sich dabei der Anordnung nach Fig. 7. Weist das stochastische Merkmal 15 eine mittlere Korngrösse h (Fig. 2) auf, so muss die gemessene Unschärfe zwischen zwei vorbestimmten Werten liegen. Damit kann die Echtheit des Dokuments 1 noch zusätzlich bestätigt werden. Die für diese Messverfahren benötigten Intensitätsmessungen können beispielsweise durch lineare oder flächenhafte Array-sensoren erfasst werden.

Um diese Messverfahren mit einem einzigen Lichtdetektor 23 durchführen zu können, muss, wie Fig. 12 schematisch zeigt, mindestens ein Teil der Echtheitserkennungseinrichtung, nämlich die Objektebenen, in die das Dokument 1 gebracht wird, das optische Sammelsystem 22 oder der Lichtdetektor 23 in der Bildfläche 24 ortsveränderlich angeordnet werden. Dabei müssen die Ortsveränderungen bei der Intensitätsmessung und bei der Fourier-Analyse senkrecht zur optischen Achse mit dem Dokument 1 oder mit den Lichtdetektoren 23 erfolgen. Bei der Tiefenschärfemessung müssen mindestens das Dokument 1, das optische Sammelsystem 22 oder der in der Bildfläche 24 liegende Lichtdetektor 23 in Richtung der optischen Achse ortsveränderlich sein. Eine Echtheitsbestimmung mit einem nur an einer Stelle empfindlichen Lichtdetektor 23 ist aber zeitaufwendig und benötigt verhältnismässig teure Bewegungseinrichtungen im optischen Teil der Echtheitserkennungseinrichtung.

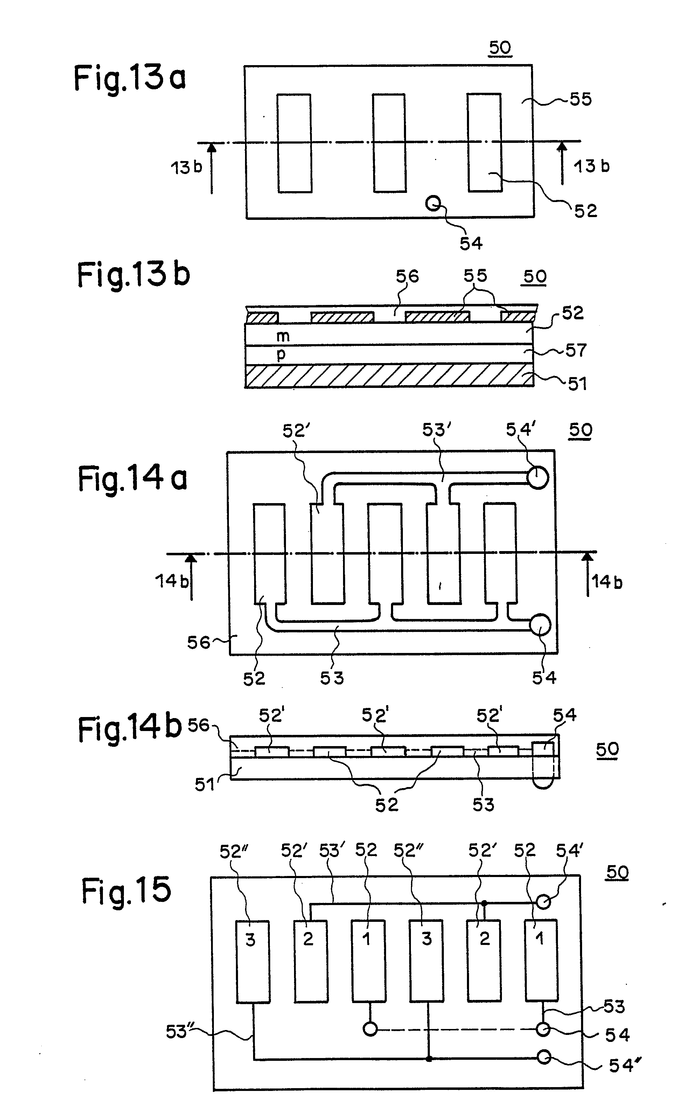

Die praktische Aufgabe der Echtheitserkennung an Dokumenten 1 liegt darin, eine sehr grosse Anzahl solcher Dokumente 1, die alle dieselben deterministischen Merkmale 12 tragen, aber verschiedene stochastische Merkmale 15 mit etwa derselben Korngrösse h (Fig. 2) aufweisen, in einer grossen Zahl von Echtheitserkennungseinrichtungen immer wieder zu überprüfen. Hierzu werden vorteilhafterweise Lichtdetektoren 23 in der Form von Sensoren 50 eingesetzt, deren empfindliche Flächen genau den charakteristischen Intensitäten 41 beziehungsweise den Streulichtintensitäten 42 angepasst sind. Beispiele für solche Sensoren 50 sind in den Fig. 13 bis 15 dargestellt, in der Beschreibung werden zur Erklärung auch Bezugszeichen aus der Fig. 11 verwendet.

Solche Sensoren 50 lassen sich mit den Fertigungsmethoden der Mikroelektronik herstellen. Sie bestehen aus einem Substrat 51, auf dem, voneinander getrennt, lichtempfindliche Schichten 52 in nebeneinander liegenden Flächen aufgebracht werden. Diese lichtempfindlichen Schichten 52 können auch als Dioden oder Transistoren oder andere Halbleiteranordnungen mit verstärkender Wirkung ausgeführt werden, die aus Schichten verschiedener Dotierung aufgebaut sind. Zusammengehörige lichtempfindliche Schichten 52 werden über elektrisch leitende Verbindungen 53 zusammengeschaltet, die Verbindungen 53 führen zu Anschlusstellen 54. Die Einteilung der Gebiete einer lichtempfindlichen Schicht 52 kann auch durch darüber aufgetragene undurchsichtige Schichten 55, beispielsweise durch Metallschichten, erfolgen. Ueber das Ganze oder mindestens über die lichtempfindliche Schicht 52 wird eine durchsichtige Abdeckschicht 56 aufgebracht, die auch gegen die Einwirkung von Feuchte oder dergleichen schützen muss. Die lichtempfindlichen Schichten 52 werden so nebeneinander angeordnet, dass bei gegebenem deterministischem Merkmal 12 und gegebenem Aufbau des optischen Teils der Echtheitserkennungseinrichtung eine Gruppe an Orten mit charakteristischen Lichtintensitäten 41, die anderen Gruppen an Orten mit nur Streulichtintensitäten 42 zu liegen kommen und beide Gruppen Anschlusstellen 54 haben.

Die Fig. 13 zeigt einen solchen Sensor 50 in einer Aufsicht als Fig. 13a und in einem Querschnitt als Fig. 13b. Er besteht aus einem Substrat 51 und einer lichtempfindlichen Schicht 52, die teilweise durch eine undurchsichtige Schicht 55, beispielsweise eine Metallschicht, abgedeckt und so ausgebildet ist, dass sie die charakteristischen Intensitäten 41 in Fig. 11 erfassen kann. Diese Schicht ist als Diode ausgebildet, unter der lichtempfindlichen Schicht 52, hier einer n-Schicht, liegt eine p-Schicht 57. Das Ganze ist mit einer Abdeckschicht 56 überdeckt. Das Anschlustück ist mit 54 bezeichnet. Dieser Detektor kann beispielsweise verwendet werden, um in einer Bildfläche 24 nach Fig. 11 zunächst die charakteristischen Intensitäten 41, darnach die Streulichtintensität 42 zu messen und so eine Aussage über die Echtheit des Dokuments 1 zu machen.

Die Fig. 14 stellt einen Detektor dar, der gleichzeitig die charakteristischen Intensitäten 41 und die Streulichtintensitäten 42 messen kann. Auch hier ist als Fig. 14a eine Aufsicht, als Fig. 14b ein Querschnitt gezeichnet. Auf dem Substrat 51 sind zwei Streifengruppen der lichtempfindlichen Schicht 52 und 52' aufgetragen, jede Gruppe ist über die leitfähige Verbindung 53 und 53' mit den entsprechenden Anschlusstellen 54 und 54' verbunden. Mit dem Detektor kann man sowohl Intensitätsvergleichs-wie auch Tiefenschärfemessungen durchführen.

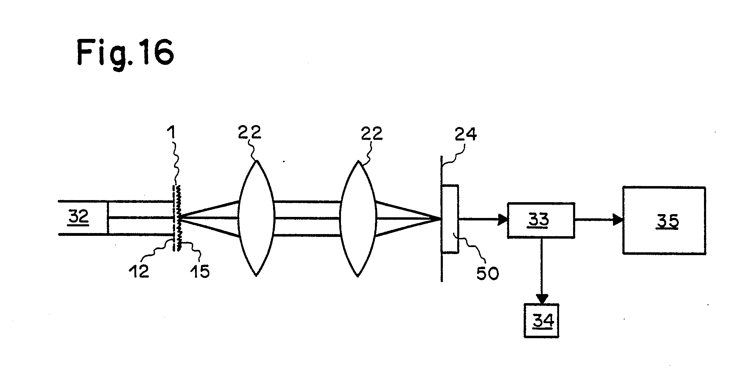

Die Fig. 15 stellt einen Dreifach-Detektor dar. Die lichtempfindliche Schicht ist in drei Streifengruppen 52, 52' und 52'' aufgeteilt, ebenso sind die Verbindungen 53, 53' und 53'' und die Anschlusstellen 54, 54' und 54'' dreifach vorhanden. Dieser Detektor oder Detektoren mit einer noch höheren, ungeraden Zahl von Streifengruppen sind vor allem für die Fourier-Analyse verwendbar. Sie werden in der Bildfläche 24 quer zur Richtung der Periode der charakteristischen Lichtintensitäten 41 gestellt. Das Intensitätsprofil für das Licht wird in dieser Richtung in kleinen Abständen aufgenommen und die gefundenen Werte in ein Rechenschema für die Fourier-Analyse in der Auswertrichtung 33, Fig. 16 eingegeben. Es wird dann die den Lichtintensitäten entsprechende Fourier-Transformierte erhalten, aus der man auf die Echtheit des Dokumentes 1 schliessen kann.

Die Fig. 16 zeigt das Schema einer vollständigen Echtheitserkennungseinrichtung. In der Beschreibung werden auch Bezeichnungen aus der Fig. 11 benutzt. Sie enthält mindestens eine Lichtquelle 32, die wenigstens teilkohärentes Licht abgibt. Das Dokument 1 wird in der Objektebene beleuchtet, es enthält in seinem Merkmalteil 5 das deterministische Merkmal 12 und das stochastische Merkmal 15. Die von dem deterministischen Merkmal 12 ausgehenden charakteristischen Intensitäten 41 werden vom stochastischen Merkmal 15 gestört. Daher kann das optische System 22 nur eine unscharfe Abbildung des deterministischen Merkmals 12 in der Bildfläche 24 hervorrufen. In der Bildfläche 24 sind die charakteristischen Intensitäten 41 durch Streulichtintensitäten 42 überlagert. Der dort befindliche Sensor 50 misst an den Stellen, an denen bei echtem Dokument 1 die charakteristischen Intensitäten 41 auftreten, und in einer anderen Messung an Stellen, an denen bei echtem Dokument 1 nur Streulichtintensitäten 42 auftreten können. In der elektronischen Auswertvorrichtung 33 wird untersucht, ob das Dokument 1 die richtigen deterministischen Merkmale 12 trägt, also echt ist. Dazu kann beispielsweise die Intensitätsvergleichsmethode oder die Fourier-Analysenmethode verwendet werden, eine Ueberprüfung, ob auch das stochastische Merkmal 15 von einem echten Dokument stammen kann, ist mit der Tiefenschärfemethode möglich. Ist das Dokument 1 als echt gefunden worden, so wird dies an der Anzeigeeinrichtung 34 wiedergegeben. Selbstverständlich kann das Echtheitssignal auch dazu benutzt werden, die Funktionen einer Anlage 35, zum Beispiel einer Personenzulassungsanlage oder eines Zahltelefons, die mit der Echtheitserkennungsanlage verbunden ist, freizugeben.

Die Erfindung zeigt gegenüber Echtheitserkennungseinrichtungen nach dem Stand der Technik folgende Vorteile.

- Sie benutzt das reelle Abbild des Merkmalteils 5;
- sie kann in einem eng begrenzten Raum eingebaut werden;
- sie benötigt weniger optische Teile als die Einrichtungen nach dem Stand der Technik;
- in ihr wird der grösste Teil der angewendeten Lichtenergie zur Echtheitserkennung ausgenutzt und
- auf Grund der grossen, von den Detektoren empfangenen Signale und der Art der Auswertung wird die Echtheit des Dokuments 1 zweifelsfrei geklärt.

**Ansprüche**

1. Echtheitserkennungseinrichtung für Dokumente, bei denen in einem Merkmalteil vorgegebene deterministische Merkmale unter stochastischen Merkmalen so verborgen liegen, dass sie ohne Hilfsmittel nicht sicher erkennbar sind, mit einer Lichtquelle für mindestens teilkohärente Strahlung, einem optischen System, Lichtdetektoren und einer mit den Lichtdetektoren verbundenen elektronischen Auswerteeinrichtung für die Echtheit des Dokumentes, dadurch gekennzeichnet, dass mit dem optischen System (22) ein reelles Bild des Merkmalteils (5) erzeugbar ist und die Lichtdetektoren (23) in einer oder mehreren Bildflächen (24) in der Umgebung des reellen Bildes des Merkmalteils (5) einerseits an Stellen angeordnet sind, an denen bei einem echten Dokument (1) charakteristische Lichtintensitäten (41) auftreten, andererseits an Stellen, an denen bei einem echten Dokument (1) nur Streulichtintensitäten (42) auftreten können.

2. Echtheitserkennungseinrichtung nach Anspruch 1, dadurch gekennzeichnet, dass zur Erhöhung des Kontrastes in den Strahlengang (26) des optischen Systems (22) filtrierende Elemente, wie Filter (25) oder Blenden eingesetzt sind.

3. Echtheitserkennungseinrichtung nach Anspruch 2, dadurch gekennzeichnet, dass das deterministische Merkmal (12) die Phase des von ihm ausgehenden Lichtes beeinflusst und als Filter (25) solche vorgesehen sind, die Phasenunterschiede in Intensitätsunterschiede wandeln.

4. Echtheitserkennungseinrichtung nach Anspruch 1, dadurch gekennzeichnet, dass in ihrem optischen Teil das Dokument (1), das optische System (22) und/oder die Lichtdetektoren (23) beweglich angeordnet sind.

5. Echtheitserenungseinrichtung nach Anspruch 1, dadurch gekennzeichnet, dass im optischen System (22) mittels halbdurchlässiger Spiegel (31) mehrere Bildflächen (24) geschaffen und die Lichtwege zu diesen Bildflächen (24) verschieden lang sind.

6. Echtheitserkennungseinrichtung nach Anspruch 1, dadurch gekennzeichnet, dass als lichtempfindlicher Detektor (23) ein Sensor (50) vorgesehen ist, bei dem lichtempfindliche Schichten (52) in nebeneinanderliegenden Flächen angeordnet und mit Anschlusstellen (54) elektrisch leitend verbunden sind.

7. Echtheitserkennungseinrichtung nach Anspruch 6, dadurch gekennzeichnet, dass die lichtempfindlichen Schichten (52) Teile von Halbleiteranordnungen mit verstärkender Wirkung sind.

8. Echtheitserkennungseinrichtung nach Anspruch 6, dadurch gekennzeichnet, dass die lichtempfindlichen Detektoren (23) als lineare oder flächige Array-Sensoren ausgebildet sind.

9. Echtheitserkennungseinrichtung nach Anspruch 1, dadurch gekennzeichnet, dass in der Bildfläche (24) die Lichtintensität an Orten gemessen wird, an denen bei echtem Dokument (1) charakteristische Lichtintensitäten (41) auftreten und an Orten in der Umgebung, an denen bei echtem Dokument (1) nur Streulichtintensitäten (42) auftreten können, in der elektronischen Auswerteeinrichtung (33) Mittelwerte dieser beiden Gruppen von Messwerten gebildet werden und durch Vergleich dieser Mittelwerte darauf geschlossen wird, ob im Dokument (1) das zu diesem gehörende deterministische Merkmal (12) vorhanden und so das Dokument (1) echt ist.

10. Echtheitserkennungseinrichtung nach Anspruch 1, dadurch gekennzeichnet, dass das deterministische Merkmal (12) eine Periode aufweist, in der Bildfläche (24) die Lichtintensität an Orten, die in mindestens einer Geraden parallel zur Periode des Abbildes des deterministischen Merkmals (12) liegen, gemessen werden und die Mess- und Ortsdaten in die elektronische Auswerteinrichtung (33) eingegeben werden, diese eine Fourier-Analyse durchführt und aus den Bedingungen, unter denen Maxima in der Fourier-Transformierten auftreten, auf die Echtheit des deterministischen Merkmals (12) und damit des Dokumentes (1) geschlossen wird.

11. Echtheitserkennungseinrichtung nach Anspruch 9 oder 10, dadurch gekennzeichnet, dass nach der Feststellung, dass das deterministische Merkmal (12) des Dokumentes (1) echt sein kann, von der elektronischen Auswerteinrichtung (33) die Unschärfe oder der Kontrast des durch das stochastische Merkmal (15) gestörten Abbilds des deterministischen Merkmals (12) in verschiedenen Bildebenen bestimmt und festgestellt wird, ob diese Unschärfe oder der Kontrast von der mittleren Korngrösse (h) des stochastischen Merkmals (15) herrühren kann.

Zürich Bank Card

2

1

5

John Müller

3

634 5928

4

Fig. 1

f     h     12   15

14

13

11

5

Fig. 2

Fig. 3

16   15

14

13

11

5

17

# Fig. 4

# Fig. 5

# Fig. 6

Fig. 7

Fig. 8

Fig. 9

Fig. 10

Fig. 11

Fig. 12

Fig.13a

50

55

13 b ↑

13 b

52

54

Fig.13 b

56    55    50

52

m

p

57

51

Fig.14 a

52'    53'    54'    50

14 b ↑

14 b

56

52    53    54

Fig.14 b

56    52'    52'    52'    54

50

51

52    53

Fig.15

52"    52'  53'  52    52"    52'  52    54'    50

3    2    1    3    2    1

53"

53

54

54"

# Fig.16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | FR-A-2 515 396 (LGZ) <br> * Figuren 1-5,10; Ansprüche; Seite 5, Zeile 21 - Seite 9, Zeile 5 * | 1,6 | G 06 K 19/08 <br> G 07 F 7/08 |
| A | | 9,10 | |
| | --- | | |
| Y | WO-A-8 605 300 (K.J. HAYDEN) <br> * Zusammenfassung; Seite 4, Zeile 14 - Seite 6, Zeile 10; Seite 16, Zeile 12 - Seite 17, Zeile 21; Figuren 1,2 * | 1,6 | |
| A | | 2,9 | |
| | --- | | |
| D,A | EP-A-0 057 271 (LGZ) <br> * Zusammenfassung; Ansprüche; Figuren * <br> --- | 1,3-10 | |
| A | DE-A-2 840 556 (G.J. DAUSMANN) <br> * Ansprüche; Seite 5, Figur 2 * <br> ----- | 1,6,7,9 | |

RECHERCHIERTE SACHGEBIETE (Int. Cl.4)

G 07 F
G 07 D
G 06 K
G 06 G

Der vorliegende Recherchenbericht wurde für alle Patentansprüche erstellt

| Recherchenort | Abschlußdatum der Recherche | Prüfer |
|---|---|---|
| DEN HAAG | 04-05-1988 | DAVID J.Y.H. |